# EUROPEAN PATENT APPLICATION

(11) **EP 0 927 571 A2**
(43) Date of publication of application: **07.07.1999**
(21) Application number: 98310450.6
(22) Date of filing: 18.12.1998
(51) Int. Cl.: B01D 53/94, B01J 23/56

(54) **Method for treating exhaust gases from an internal combustion engine using platinum/alumina nitrogen oxide absorbents**

(30) Priority: 18.12.1997 US 992943
(71) Applicant: Ford Global Technologies, Inc., Dearborn, Michigan 48126 (US)
(72) Inventor: Montreuil, Clifford Norman, Farmington, Michigan 48336 (US); Kudla, Robert J., Warren, Michigan 48091 (US); Chatta, Mohinder S., Northville, Michigan 48167 (US)
(74) Representative: Messulam, Alec Moses

(57) **Abstract**

The invention is a method of treating exhaust gases generated by an internal combustion engine, by locating a nitrogen oxide trap in the exhaust gas passage and cycling the air/fuel ratio of the exhaust gases entering the trap between lean and rich, such that the trap absorbs nitrogen oxides during the lean cycle and desorbs the nitrogen oxides during the rich cycle. The trap consists essentially of: (a) a porous support material comprising mostly γ-alumina and (b) precious metal comprising at least 0.5 to 4 wt. % platinum deposited on the support, the amount of the platinum being based on the weight of said support material. The desorbed nitrogen oxides may be converted over the precious metal to N₂ and O₂ by reductants like hydrocarbons present in the exhaust gas.

## Description

This invention relates to a method of using a nitrogen oxide trap made essentially of only precious metal comprising at least platinum carried on an alumina porous support material in an exhaust gas passage of a gasoline internal combustion engine to absorb nitrogen oxides during lean-burn operation and release the nitrogen oxides when the oxygen concentration in the exhaust gas is lowered.

Reference is made to US patent applications Serial No. 08/993,927 entitled "Tungsten Modified Platinum/Alumina NOx Traps For Automotive Emission Reduction".

Catalysts are employed in the exhaust systems of automotive vehicles to convert carbon monoxide, hydrocarbons, and nitrogen oxides (NOx) produced during engine operation into more desirable gases. When the engine is operated in a stoichiometric or slightly rich air/fuel ratio, i.e., between about 14.7 and 14.4 , catalysts containing precious metals like palladium and rhodium are able to efficiently convert all three gases simultaneously. Hence, such catalysts are often called "three-way" catalysts.

It is desirable, however, to operate gasoline engines under "lean-burn" conditions where the A/F ratio is greater than 14.7, generally between 19 and 27, to realize a benefit in fuel economy. Such three-way catalysts are able to convert carbon monoxide and hydrocarbons but are not efficient in the reduction of NOx during lean-burn (excess oxygen) operation. Efforts have been made in developing lean-burn catalysts in recent years. One deficiency of some of the conventional lean-burn catalysts is that they are based on zeolite materials which are less than durable at the elevated temperatures necessary for their efficient catalytic operation in the exhaust gas system. Lean-burn catalysts act to reduce the NOx through the use of hydrocarbons and carbon monoxide over a catalyst, the hydrocarbons and carbon monoxide hence being in turn oxidized.

Recent efforts to solve the problem of NOx in lean-burn systems have focused on lean-NOx traps, i.e., materials which are able to absorb nitrogen oxides during lean-burn operation and then later release them when the oxygen concentration in the exhaust gas is reduced. Hence, these traps are used with engine systems which cycle between lean and rich operation. Typical of material combinations in conventional traps are an alkaline earth metal like barium with a precious metal catalyst like platinum. European Patent Application 0613714A2 published September 7th, 1994 discloses that platinum or palladium in various combinations with at least two ingredient materials of the alkali metals, alkaline earth metals, transition metals, or rare-earth metal are capable of storing or absorbing nitrogen oxides under exhaust conditions of excess oxygen and desorbing the NOx during stoichiometric or fuel-rich atmospheres.

The widely held mechanism for this absorption phenomena is that during the lean-burn operation the platinum first oxidizes NO to NO₂ and the NO₂ subsequently forms a nitrate complex with the other material, e.g., the barium. In the regeneration mode as during a stoichiometric or rich environment, the nitrate is thermodynamically unstable, and the stored NOx is released. NOx then catalytically reacts over the platinum with reducing species in the exhaust gas like HC and CO to form O₂ and N₂. Hence to use lean-NOx traps, a hybrid-mode engine strategy is used. The air/fuel ratio is cycled between extended periods of lean operations where the traps sorb NOx emissions, alternated with brief, fuel-rich intervals to desorb the adsorbed NOx and regenerate the lean-NOx trap. US patent 5,473,887 to Takeshima et al discloses this type of exhaust purification device, which teachings of the operation and use of such device are hereby expressly incorporated by reference in this document.

The alkali metal and alkaline earth metals which are typically utilized for NOx sorption have, however, the serious drawback that they are readily poisoned by sulfur in the exhaust gas, the alkali metals being the most seriously poisoned. Most fuels for automotive vehicles contain sulfur and when burnt, the sulfur is converted to sulfur compounds like SO₂. Over time, the sulfur compounds react with these trap materials forming sulfates which will not revert back to the sorption material. These sulfates are inactive for NOx sorption. As a result, the typical NOx with precious metal and an alkaline earth like barium is strongly deactivated by sulfur in the fuel.

We have now unexpectedly found that platinum/alumina catalysts, i.e., without inclusion of basic oxides like BaO or SrO reported to be an essential part of the catalyst, perform equally well for nitrogen oxide trapping/desorbing under lean/rich exhaust gas conditions. Even though the Pt-BaO/alumina, when fresh, has a slight advantage over Pt/alumina for NOx treatment, BaO-Pt/alumina catalyst is more sensitive to sulfur poisoning and has been found to lose this advantage upon aging. The present invention is less expensive than such conventional NOx trap materials and yet also more durable which provides an ideal NOx trap material. The ability of the present invention material for NOx absorbing/desorbing as required for NOx trap materials was totally unexpected by the inventors since alumina is not a conventional basic oxide. At this point the inventors do not understand the mechanism of nitrogen oxide absorption by the Pt/alumina catalysts, however, it does not seem to be based on the basicity of the washcoat alone.

This invention is directed to a method for treating exhaust gases by using a particular nitrogen oxide trap material. The method comprises locating in an exhaust gas passage of an internal combustion engine a nitrogen oxide trap material consisting essentially of: (a) porous support material comprising mostly γ-alumina; and (b) precious metals comprising at least 0.5 to 4 wt. % platinum deposited on the support, the amount of the platinum being on the weight of the support material. Other precious metals like palladium or rhodium, preferably the latter, may also be deposited on the support with the platinum. The method further comprises exposing the trap material to engine exhaust gases having a lean of stoichiometry air/fuel ratio whereby said trap absorbs nitrogen oxides from the exhaust gas; monitoring the amount of absorbed nitrogen oxides in the trap; and purging absorbed nitrogen oxides from the trap at a selected time based on the amount of absorbed nitrogen oxides by subjecting the trap to engine exhaust gases whose air/fuel ratio is stoichiometric or rich of stoichiometry. Preferably the support material is gamma-alumina.

Advantageously, we have found that by using only precious metal comprising at least platinum metal, without the alkali metals or more particularly the alkaline earth metal conventionally used in prior art nitrogen oxide trap materials, the NOx conversion efficiency of the materials is maintained even in the presence of sulfur in the exhaust gas. We have found this to be based on the resistance of the invention trap materials to forming sulfates, in contrast to conventional absorbents which include alkaline earth oxides like barium with the platinum, the alkaline earth oxide being readily poisoned by sulfur. This allows for improved operation of the present trap as compared to the prior conventional traps. The desorbed NOx is expected to be converted to nitrogen and oxygen over the platinum.

The invention will now be described further, by way of example, with reference to the accompanying drawings, in which:
Fig. 1 is a graph showing the nitrogen oxide conversion efficiency of two lean-NOx traps, one according to an embodiment of the present invention and the other a comparative example using barium-platinum/alumina;
Fig. 2 is a graph showing nitrogen oxide conversion efficiency for platinum only traps according to embodiments of the present invention;
Fig. 3 is a graph showing nitrogen oxide conversion efficiency for comparative example NOx traps using Pt-Ba/alumina not according to embodiments of the present invention;
Fig. 4 is a graph showing nitrogen oxide conversion efficiency during cycling of lean-NOx traps according to Pt/alumina embodiments of the present invention and a comparative example of Pt-Ba/alumina; and
Figs. 5 and 6 are graphs showing NOx conversion efficiency of the present invention embodiment NOx traps and comparative examples as measured versus cycle time.

The invention method comprises locating a NOx trap material of precious metal comprising at least platinum coated on alumina material, as disclosed above, in the exhaust gas passage of an internal combustion engine, whereby the material absorbs NOx during lean operation and releases the absorbed NOx during stoichiometric or rich operation, i.e., as air/fuel ratios are cycled between lean and rich.

The nitrogen oxide trap material consists essentially of precious metal comprising at least platinum loaded on a mostly γ-alumina support material (herein termed "γ-alumina support material"). Contrary to conventional trap materials, in the present invention other materials like alkali metals (e.g., potassium) or alkaline earth material (e.g., barium oxide or strontium oxide) conventionally loaded with platinum on the alumina support are not provided on the support with the platinum. That is, only precious metal is loaded on the mostly γ-alumina support in the present method invention.

By "mostly γ-alumina" in this invention is meant that the support material comprises more than about 50% by weight γ-alumina. More preferably the support is greater than 80%, and most preferably substantially all γ-alumina. In addition to the γ-alumina, however, if desired the γ-alumina support material may comprise small amounts of other materials often added into the support for stabilization or to provide oxygen storage properties like cerium oxide, barium oxide, zirconium oxide, lanthanum oxide, titanium oxide, silica, and alpha-alumina. This support material comprising mostly γ-alumina is desired because it has high surface area, good adhesion and low chemical interaction with the platinum loaded thereon.

The required precious metal comprising at least platinum may be loaded onto the γ-alumina support material in any manner, several methods for providing precious metals on support materials being well known in the art. One particularly convenient method is by impregnating the γ-alumina support material with an aqueous or organic solvent solution comprising a soluble compound of the metal. Exemplary of soluble platinum containing compounds are compounds like chloroplatinic acid, amino-Pt-nitrates like tetramine platinum nitrate and Pt-carboxylates. Exemplary of such solvents are water, solution of alkalis like sodium hydroxide, ethanol, toluene, isopropyl alcohol, acetone, methylethylketone, butylacetate, and dimethylformamide, water and water/methanol being particularly preferred. Any platinum compound which is soluble in an aqueous or organic medium and whose functional group is capable of being decomposed by heat to leave only the precious metal or its oxide on the support material may be employed in this impregnation technique. Hence, such a compound is called a platinum precursor compound. Other platinum precursor compounds useful in this invention in addition to those listed above will be apparent to those skilled in the art in view of the present disclosure.

According to the method of impregnation disclosed above, the platinum precursor compound is dissolved generally by simply mixing the compound into an aqueous or organic solvent to make a catalyst precursor solution thereof. A solution of the catalyst compound is generally further diluted for impregnation of the support. The catalyst precursor solution may also comprise a mixture of compatible organic solvents and/or platinum precursor compounds.

For useful application in an exhaust system, the washcoat will be carried on a substrate (mechanical carrier) of a high temperature stable, electrically insulating material such as cordierite, mullite, etc. A mechanical carrier is preferably comprised of a monolithic magnesium aluminum silicate structure (i.e. cordierite), although the configuration is not critical to the catalyst of this invention. It is preferred that the surface area of the monolithic structure provide 50-1000 meter square per liter structure, as measured by N₂ adsorption. Cell density should be maximized consistent with pressure drop limitations and is preferably in the range of 200-800 cells per square inch of cross-sectional area of the structure. The substrate may be in any suitable configuration, often being employed as a monolithic honeycomb structure, spun fibers, corrugated foils or layered materials.

A washcoat of the support material may be applied to the substrate and then impregnated with the precursor catalyst solution. Alternately, the impregnated washcoat may be applied to the substrate. Generally, the washcoat (support material) is provided first on the substrate. Optimally, the washcoat is provided on the substrate in an amount of between about 25% and 35% by weight based on the weight of the substrate (e.g., monolith). Still other ways of providing the catalyst product will be apparent to those skilled in the art in view of the present disclosure, the method not being critical to the present invention. Preferably, a slurry of a platinum-impregnated washcoat is made into a slurry and the monolith is coated with it. Generally, for use in an exhaust system this impregnated washcoat is subjected to elevated temperatures to decompose and eliminate the functional group of the catalyst precursor. It may be further subjected to calcining.

If the heating is carried out in the air, the platinum compound may exist at a platinum oxide compound which at high temperatures generally decomposes to platinum and oxygen. Thus it often exists as a mixture of platinum and its oxides.

The support material is loaded such that the amount of platinum is between 0.5-4% by weight, based on the weight of the support. Preferably the platinum comprises about 1.5-2.5 wt. %, mostly preferably about 2% wt. Other precious metals may be included with the platinum like palladium, rhodium or their mixture. Rhodium is particularly useful to convert desorbing nitrogen oxides during purging.

As discussed above it is well known in the art that conventional NOx traps using barium or potassium as the NOx absorbent are susceptible to poisoning by sulfur compounds present in the exhaust gases. We have found that by using an essentially alkaline earth-free material having essentially precious metals on the alumina, sulfur poisoning is avoided. The amount of sulfur oxide reacting with the support is lowered which may provide for the material to be less prone to sulfur poisoning.

The method of using the nitrogen oxide trap material according to the present invention may further comprise other aspects. For example, it may further comprise locating another catalyst device in the exhaust gas passage, for example, a catalytic converter employing a conventional three-way catalyst containing palladium, etc., or a lean-burn catalyst such as one containing transition metals like silver, copper, etc. These catalysts, e.g., the three-way catalyst, can be placed upstream of the NOx trap, hence closer to the engine. In such an arrangement, the three-way catalyst being preferably closely mounted to the engine would warm up quickly and provide for efficient engine cold start emission control. The NOx trap would ideally be positioned downstream of the three-way catalyst where the lower exhaust gas temperature enables maximum NOx trap efficiency. Also, with the NOx trap positioned downstream of the three-way catalyst in a remote location, it is protected against very high exhaust gas temperatures which could damage it. During periods of lean-burn engine operation when the three-way catalyst is ineffective so that NOx passes through the three-way catalyst, NOx is stored on the trap.

A method embodying the invention involves monitoring the amount of nitrogen oxides absorbed on the trap material, i.e., the fullness of the trap to absorbed nitrogen oxides. This could be done several ways including estimating the amount of generated nitrogen oxides for engine load-time information as by an on board computer, or by measuring the amount of nitrogen oxide concentration in the exhaust gas at positions before and after the nitrogen oxide trap material in the passage using, e.g., a nitrogen oxide sensor. Still other ways to monitor the amount of absorbed nitrogen oxide will be apparent to those skilled in the art in view of the present disclosure. When it is determined from this monitoring that the trap should be purged of nitrogen oxides and regenerated, the trap material is subjected to engine exhaust gases whose air/fuel ratio is stoichiometric or rich. This may be accomplished by short periods of generally slightly rich engine operation. Another way to generate the rich air/fuel ratio is to provide hydrocarbons into the trap to decrease the air/fuel ratio. Still other ways to decrease the air/fuel and provide richer exhaust gas to the trap will be apparent to those skilled in the art in view of the present disclosure. There is no criticality associated with the way in which the amount of nitrogen oxides in the trap are determined nor in the way the exhaust is made richer to purge the trap. The purging is generally carried out at a selected time compatible with engine operation and for a time necessary to purge some or all of the absorbed nitrogen oxide, as selected for optimal operation of the trap and the engine system. It may be desirable to vary these parameters and coordinate them with the trap temperature, etc., which may aid in purging.

The stored NOx is then released from the trapping material and is catalytically reduced over the platinum in the trap by the excess hydrocarbons and other reductants like CO and H₂ present in the exhaust gas. In general, the released NOx is efficiently converted to N₂ and O₂, which efficiency is enhanced when rhodium is contained within the NOx trap washcoat. However, one may wish to place a second three way catalyst downstream of the NOx trap in order to further aid in this regard. The trap is particularly useful for use with gasoline engines where during the lean-burn portion the air/fuel ratio is usually in the range 19-27.

For testing of the present invention, a granular support is mixed with a catalyst precursor solution and stirred at an elevated temperature generally of about 75-120°C to evaporate the solvent. The impregnated support material is then heated to decompose and eliminate the functional group from the mixture, such as by heating at 320°C for one hour and thereafter for four hours at 600°C. The platinum may be impregnated into the washcoat support from multiple impregnations. For laboratory evaluation of the catalyst, it is packed in a glass tube sealed with quartz glass wool and simulated exhaust gas is then passed through the tube.

### Example 1

A cordierite honeycomb monolith, containing 35% (by weight) gamma-alumina washcoat is impregnated with chloroplatinic acid solution to deposit 2% Pt (by weight, of the washcoat). The monolith is dried at 100°C for five hours. The monolith is then cut into two pieces and one piece is dipped into barium nitrate solution to deposit 12% (by weight) of the washcoat, BaO on the sample. It is dried at 100°C for five hours and then both of the samples are calcined at 500°C for four hours.

Both of the samples are evaluated for NOx conversion on a flow reactor. The feed gas composition is given below.

FEED GAS COMPOSITION:
Space Velocity = 25,000 HR⁻¹
HC = 40 ppm
CO = 2400 ppm
H₂ = 800 ppm
NOx = 600 ppm
O₂ = 1400 ppm
CO₂ = 10.0%
H₂O = 10.0%

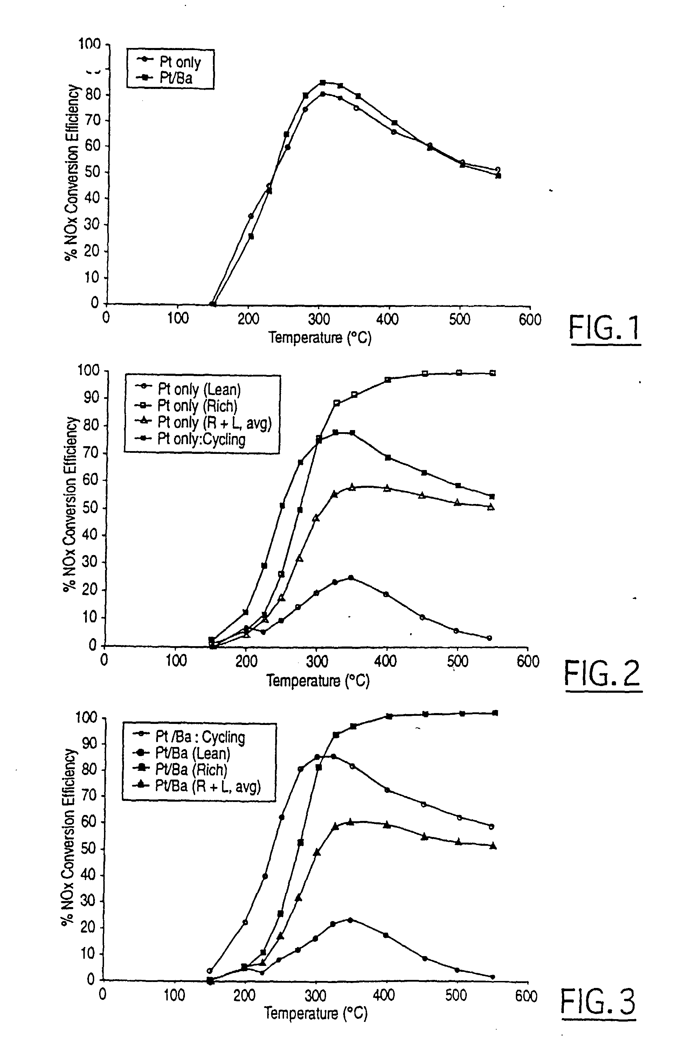

The feed gas is maintained fuel-lean by adding O₂ (6%) for one minute and then rendered rich by adding CO (1%). This feed gas composition modulation is maintained during the catalyst evaluation. The NOx conversion is shown in Fig. 1. In this experiment, the Pt/Al₂O₃ composition shows only slightly lower NOx conversion than the Pt-Ba/catalyst, however, in other experiments, we have found comparable NOx conversion to that of Pt/BaO/Al₂O₃ and Pt/SrO/Al₂O₃ catalyst.

### Example 2

The Pt/Al₂O₃ catalyst described in Example 1 is evaluated under lean and rich conditions separately and also under cyclic conditions as outlined in Example 1. The NOx conversion under cyclic conditions, as shown in Fig. 2, is much higher than the numerical average of lean and rich NOx conversion.

The Pt/BaO/Al₂O₃ catalyst from Example 1 is also evaluated as described above. The results are shown in Fig. 3. These results show that under all test conditions, both catalyst are comparable in performance.

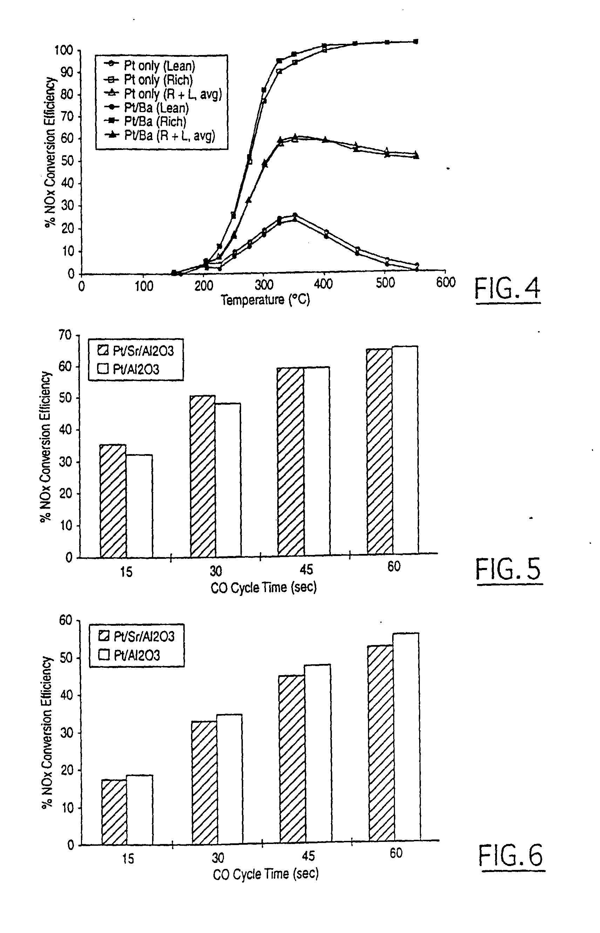

The NOx conversions under lean and rich conditions for both the catalysts are plotted in Fig. 4. Both Pt/Al₂O₃ and Pt/BaO/Al₂O₃ are very comparable under rich, lean, and NOx trap conditions as seen in this figure.

### Example 3

Two catalysts containing 2% Pt and 2% Pt/6% SrO were prepared as described in Example 1. The NOx reduction was evaluated at 350°C as described for Example 1, by adjusting the rich cycle to 15, 30, 45, and 60 seconds while maintaining the lean cycles for 60 seconds all the time. The NOx conversion values are shown in Fig. 5.

### Example 4

The catalysts described in Example 3 were evaluated at 500°C as described in Example 3. The NOx reduction values under various cycles are shown in Fig. 6.

### Example 5

A catalyst containing 2.1% Pt is prepared on an alumina (95%) and silica (5%) monolith as described in Example 1. The catalyst is evaluated for NOx reduction under cycling conditions (1 min. lean; 1 min. rich) as described in Example 1. The maximum NOx conversion was 76%.

### Example 6

A catalyst containing 1.9% Pt is prepared on a composite oxide monolith (97% alumina, 3% titania) as described in Example 1. The catalyst is evaluated for NOx reduction under cycling conditions (1 min. lean; 1 min. rich). The maximum NOx reduction is 74%.

### Example 7

A catalyst containing 2% Pt is prepared on a composite oxide monolith (98% alumina, 2% zirconia) as described in Example 1. The catalyst is evaluated for NOx reduction under cyclic conditions (1 min. lean; 45 sec. rich) as described in Example 3. The maximum NOx conversion is 59%. A control trap catalyst containing 7% BaO provided comparable NOx reduction under the test conditions.

### Example 8

Ceria (2% by weight) is deposited on the alumina monolith described in Example 1, and a catalyst containing 1.9% Pt and 0.5% Rh is prepared and evaluated as described in Example 1. The maximum NOx conversion under cyclic conditions (1 min. lean; 1 min. rich) is 77%.

## Claims

1. A method for treating exhaust gases from an internal combustion engine, said method comprising the steps of:
locating in the exhaust gas passage of said internal combustion engine a nitrogen oxide trap material including:
(a) a porous support comprising mostly γ-alumina;
(b) precious metals comprising at least 0.5 to 4 wt. % platinum and optionally palladium, rhodium, or their mixture, deposited on said support, the amount of said platinum being based on the weight of said support material;
exposing said nitrogen oxide trap material to engine exhaust gases having a lean of stoichiometry air/fuel ratio whereby said trap material absorbs nitrogen oxides from the exhaust gas;
monitoring the amount of absorbed nitrogen oxides absorbed by said trap material; and
purging said absorbed nitrogen oxides from said trap material by subjecting said nitrogen oxide trap material to engine exhaust gases whose air/fuel ratio is stoichiometric or rich of stoichiometry.

2. A method according to claim 1 wherein said platinum comprises about 1.5-2.5 wt. %.

3. A method according to claim 1 or 2, wherein said support is γ-alumina.

4. A method according to claim 1 or 2, wherein said support further comprises materials selected from the group consisting of cerium oxide, barium oxide, zirconium oxide, lanthanum oxide, titanium oxide, alpha-alumina and mixtures of any of them.

5. A method according to any one of the preceding claims, which further comprises locating a three-way catalyst or a lean-nitrogen oxide catalyst upstream of said nitrogen oxide trap.

6. A method according to any one of the preceding claims, wherein said purging step is carried out based on the amount of absorbed nitrogen oxides absorbed by the trap.

7. A method according to any one of the preceding claims, wherein said locating step comprises first forming said nitrogen oxide trap material by impregnating said porous support with a solution consisting essentially of a platinum compound dissolved in solvent therefor, and subsequently drying the material to remove said solvent.

8. A method according to any one of the preceding claims, wherein said metal carried on said support is further carried on a substrate selected from cordierite, metals or ceramic.

9. A method according to claim 8 wherein said substrate is a honeycomb shape.

10. A method according to claim 8 or 9 wherein said substrate carries about 25-35 weight percent alumina support loaded with platinum.
